## Europäisches Patentamt
## European Patent Office
## Office européen des brevets

(19)

(11) Numéro de publication: **0 107 997**
**B1**

(12) **FASCICULE DE BREVET EUROPÉEN**

(45) Date de publication du fascicule du brevet:
**13.08.86**

(21) Numéro de dépôt: **83402010.9**

(22) Date de dépôt: **14.10.83**

(51) Int. Cl.⁴: **B 60 T 13/24**

(54) Servomoteur,d'assistance au freinage.

(30) Priorité: **29.10.82 FR 8218184**

(43) Date de publication de la demande:
**09.05.84 Bulletin 84/19**

(45) Mention de la délivrance du brevet:
**13.08.86 Bulletin 86/33**

(84) Etats contractants désignés:
**BE DE GB IT NL SE**

(56) Documents cité:
**DE-B-1 277 047**
**FR-A-1 549 121**
**FR-A-2 442 166**
**FR-A-2 499 923**
**GB-A-2 009 871**
**GB-A-2 022 209**
**GB-A-2 061 403**
**US-A-1 765 760**

(73) Titulaire: **BENDIX France, 126, rue de Stalingrad,
F-93700 Drancy (FR)**

(72) Inventeur: **Carré, Jean- Jacques, 59 Bld de l'Est,
F-93340 Le Raincy (FR)**
Inventeur: **Pressaco, Pierre, 45 Rue E. Zola, F-93120
La Courneuve (FR)**

(74) Mandataire: **Le Moenner, Gabriel, SERVICE
BREVETS BENDIX 44, Rue François 1er, F-75008
Paris (FR)**

LIBER, STOCKHOLM 1986

EP 0 107 997 B1

## Description

La présente invention concerne les servo-moteurs d'assistance au freinage pour véhicules automobiles, plus particulièrement du type à dépression, destinés à l'actionnement d'un maître-cylindre de circuit de freinage du véhicule, du type comprenant un boîtier, une structure de paroi mobile axialement dans ce botier divisant ce dernier en une première et une seconde chambres, une valve de commande, disposée dans une partie de moyeu centrale solidaire en déplacement de la structure de paroi mobile, pour établir sélectivement, sous l'action d'un organe d'entrée, relié typiquement à une pédale de frein, une communication entre les deux chambres, et une première et une seconde parois flexibles étanches, de configuration sensiblement cylindrique, disposées respectivement dans les première et seconde chambres, et reliées chacune à la paroi d'extrémité correspondante du boîtier, de façon à ménager dans les deux chambres des zones centrales délimitées extérieurement radialement, par lesdites première (21) et seconde (23, 23') parois flexibles. Un servomoteur de ce type est décrit dans le document US—A—1765 760.

Dans les servo-moteurs classiques, tels que ceux décrits dans le brevet FR 1 549 121 ou dans le demande de brevet FR—A—2 499 923, la chambre avant du boîtier, typiquement la chambre dite de dépression, s'étend sur la totalité de la section transversale de la partie avant du boîtier et la chambre arrière, ou chambre de travail, est délimitée intérieurement par la partie de moyeu centrale, laquelle comporte une portion arrière de diamètre réduit, dans laquelle s'étend l'organe d'entrée, qui coopère à coulissement étanche avec la zone annulaire centrale de la coquille arrière du boîtier.

Dans le document US—A—1765 760 susmentionné, la paroi flexible dans la chambre de dépression est reliée à l'organe d'entrée et ne sert en fait qu'à assurer l'étanchéité entre ce dernier et l'ouverture dans la paroi du boîtier dans laquelle coulisse l'organe d'entrée, la paroi flexible dans la chambre de travail servant à mettre la valve de commande en communication avec l'atmosphère.

La présente invention a pour objet de proposer un agencement de servo-moteur, du type général défini plus haut, ménageant, dans le boîtier, une zone centrale axiale "neutre" ou indifférente, c'est-à-dire ne participant pas au système d'échanges de commande ou d'actionnement pneumatiques du servo-moteur, et dans laquelle se déplace la partie de moyeu centrale, de telle façon que les chambres du boîtier intéressent essentiellement la structure de paroi mobile proprement dite formant piston. L'invention permet en outre un guidage central de l'équipage structure de paroi mobile/partie de moyeu centrale et offre de plus une grande versatilité pour ce qui est des modes de couplage du servo-moteur au maître-cylindre, d'un côté du boîtier, et/où à la paroi fixe de montage de l'ensemble servo-moteur/maître-cylindre, de l'autre côté du boîtier.

A cet effet, conformément à l'invention, les première et seconde parois flexibles sont reliées chacune de façon étanche à la partie de moyeu centrale renfermant la valve et qui comporte au moins un passage traversant reliant en permenence les zones centrales.

Selon un mode particulier de réalisation de l'invention, le servomoteur comprend en outre au moins un élément stationnaire de guidage s'étendant axialement dans les zones centrales et reçu à coulissement dans le passage traversant dans la partie de moyeu centrale pour le guidage en déplacement axial de cette dernière.

On sait, par ailleurs, que, dans une montage classique en porte-à-faux sur une paroi fixe du véhicule d'un ensemble maître-cylindre/servo-moteur d'assistance avec le servo-moteur intercalé entre le maître-cylindre et la paroi fixe, les efforts de réaction en fonctionnement sont transmis essentiellement par les coquilles ou parois d'extrémité constitutives du boîtier servo-moteur, avec les inconvénients afférents connus pour aboutir à un compromis entre la rigidité nécessaire et la légèreté souhaitée du boîtier.

Dans cet esprit, il a été proposé, notamment dans le document GB—A—2 009 871, des éléments transmetteurs d'efforts entre le maître-cylindre et la paroi fixe de montage sous la forme de tirants reliant axialement, en les traversant, les coquilles du boîtier et traversant la structure de paroi mobile séparant les deux chambres du boîtier, des moyens étant prévus pour ajuster de façon étanche cette structure de paroi mobile aux éléments ou tirants transmetteurs d'efforts s'étendant axialement au travers de chacune des chambres du boîtier. Cette technique pose des problèmes au niveau de l'étanchéité non seulement entre les tirants et la structure de paroi mobile mais aussi entre les extrémités des tirants et les coquilles respectives qu'ils traversant pour leur solidarisation, à l'extérieur du boîtier, au maître-cylindre et à la paroi fixe de montage de l'ensemble.

Il a également été proposé, notamment dans le document GB—A—2 022 209, un élément transmetteur d'efforts sous la forme, cette fois, d'un tube central reliant intérieurement les deux coquilles. Cette technique, dans laquelle le tube central s'étend également à l'intérieur des deux chambres du boîtier, pose pour sa part des problèmes d'étanchéification et de raccordement entre la partie de moyeu centrale, se déplaçant à l'intérieur du tube central, et la structure de paroi mobile à diaphragme située à l'extérieur, radialement, du tube central.

La présente invention a donc pour autre objet de pallier ces inconvénients en proposant une structure de servo-moteur pourvue d'éléments transmetteurs d'efforts traversant axialement le boîtier, suivant un agencement simple, faible, de faible coût de fabrication, ne soulevant aucun problème d'étanchéité particulier, ni de surcroît de complexité des organes de commande de d'actionnement internes du servo-moteur.

Pour ce faire, selon une autre caractéristique de l'invention, l'élément stationnaire de guidage est constitué d'un élément transmetteur d'effort traversant axialement le boîtier, dans la zone centrale "neutre" susmentionnée.

En mettant ainsi à profit la zone central axiale neutre du boîtier, qui se trouver typiquement à l'atmosphère, l'élément transmetteur d'efforts, en pratique au moins deux tirants disposés symétriquement par rapport à l'axe général du boîtier, peut s'étendre au travers du corps de la partie de moyeu centrale, radialement à l'extérieur de la zone centrale de cette partie de moyeu abritant la valve de commande, sans poser de problèmes d'étanchéité ni avec la structure de paroi mobile séparant les deux chambres du boîtier, ni avec les parois d'extrémité de ce dernier, du fait que cet élément transmetteur d'efforts ne traverse aucune des chambres du boîtier, et sans interférer en aucune façon avec le système d'échanges de fluide du servo-moteur, tout en contribuant au guidage axial de la partie de moyeu centrale et, partant, de la structure de paroi mobile reliée périphériquement à cette dernière, et en autorisant, à l'extérieur du boîtier et sans nécessiter de modifications particulières de ce dernier, toutes les adaptions possibles aux diverses implantations imposées pour les moyens de montage in situ de l'ensemble maître-cylindre/servo-moteur dans un véhicule.

D'autres caractéristiques et avantages de la présente invention ressortiront de la description suivante de modes de réalisation, donnés à titre illustratif mais nullement limitatif, faite en relation avec les dessins annexés, sur lesquels:

La Fig. 1 est une vue en coupe transversale d'un servo-moteur d'assistance selon l'invention;

La Fig. 2 est une vue en coupe partielle, à plus grande échelle, suivant le plan II—II de la fig. 1; et

La Fig. 3 est une vue en coupe similaire à la Fig. 2, montrant une variante de réalisation du servo-moteur selon l'invention.

Dans la description qui va suivre et sur les dessins, les éléments identiques ou analogues dans les différentes variantes de réalisation portent les mêmes chiffres de référence, éventuellement affectés d'un accent.

Le servo-moteur d'assistance selon l'invention comprend de façon générale un boîtier 1 constitué par l'assemblage périphérique de deux coquilles, respectivement une coquille avant 2 et une coquille arrière 3, réalisées en tôle mince ou en matériau plastique. Dans le mode de réalisation représenté, les deux coquilles 2 et 3 sont réalisées chacune d'une seule pièce en matériau plastique et sont assemblées périphériquement par un anneau serti 4, les extrémités annulaires en regard des deux coquilles emprisonnant entre elles le bourrelet périphérique d'un membrane en maté-élastomère 5 constituant, avec la plateau support de membrane 6 qui lui est associé, la structure de paroi mobile formant piston, généralement désignée par la référence 7, séparant l'intérieur du boîtier en une première chambre avant 8 et une seconde chambre arrière 9. La structure de paroi mobile 7 est sollicité élastiquement vers la coquille arrière 3 dans la position de repos du servo-moteur par un ressort 10 prenant appui sur la coquille avant 2.

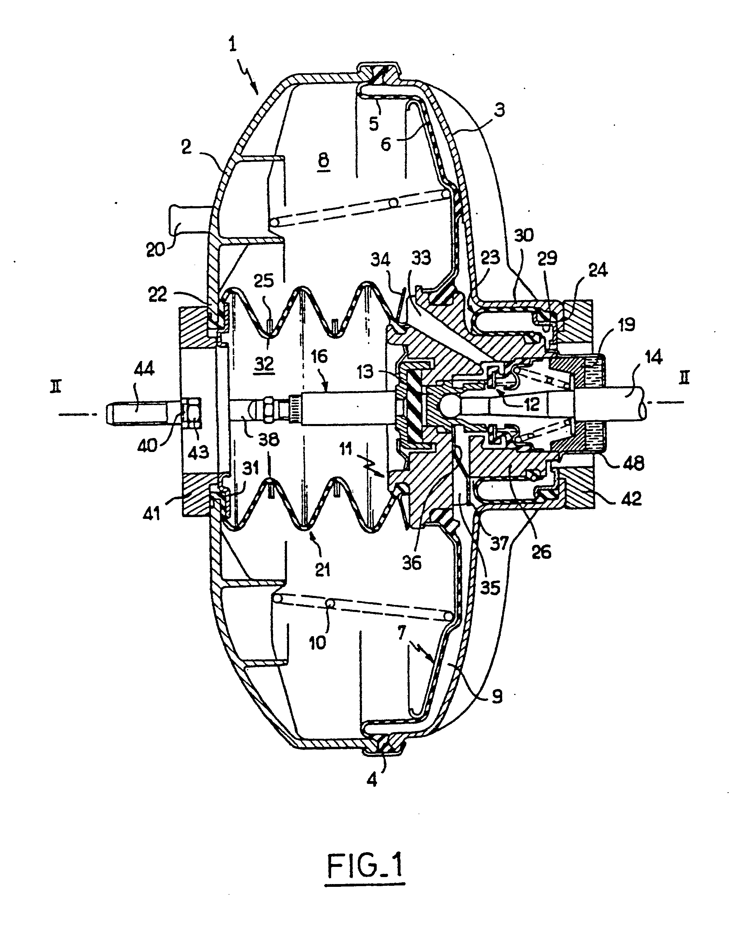

La zone centrale ou intérieure de la structure de paroi mobile 7 est solidarisée à une partie de moyeu centrale 11 renfermant une valve de commande à trois voies 12 de type classique, telle que décrite en relation avec la Fig. 1 de la demande de brevet FR—A—2 499 923 susmentionnée dont le contenu est supposé intégré ici pour référence, et dont le plongeur ou noyau axial coulissant 13 est relié, d'une parte, à l'organe ou tige de commande d'entrée 14 (destiné à être relié à la pédale de frein) et d'autre part, coopère avec un disque de réaction 15 disposé dans une coupelle d'un organe de sortie 16 du servo-moteur destiné à coopérer avec le piston primaire d'un maître-cylindre 17 rapporté sur la coquille avant 2 du boîtier 1, comme on le verra par la suite. L'organe de sortie 16 est maintenu dans la zone frontale avant de la partie de moyeu centrale 11 par une rondelle élastique 18. La partie de moyeu centrale 11 est pourvue classiquement, à son arrière, d'un double filtre 19 pour éviter la contamination de l'air atmosphérique que la valve 12 introduit sélectivement, suite au déplacement du plongeur 13 sous l'effet de l'organe d'entrée 14, dans la chambre arrière ou de travail 9, la chambre avant 8 étant en permanence maintenue en dépression dans la mode de réalisation représenté, la coquille avant 2 étant pourvue à cet effet d'un embout 20 de raccordement du servo-moteur à une source de dépression du véhicule.

Conformément à l'invention, la chambre avant 8 est délimitée intérieurement de façon étanche par une première paroi étanche flexible 21 s'étendant entre la zone d'extrémité annulaire centrale 22 de la coquille avant 2 et la périphérie de l'extrémité avant adjacente de la partie de moyeu centrale 11. Similairement, la chambre arrière 9 est délimitée intérieurement de façon étanche par une seconde paroi étanche flexible 23 s'étendant entre la zone d'extrémité centrale annulaire 24 de la coquille arrière 3 et la périphérie de l'extrémité axiale (arrière) correspondante de la partie de moyeu centrale 11. De cette façon, conformément à l'invention, les parois étanches flexibles 21 et 23 étant sensiblement cylindriques, typiquement de section légèrement elliptique, chaque chambre 8 ou 9 présente un volume de travail sensiblement annulaire intéressant essentiellement la structure de paroi mobile 7 et n'intéressant par contre pas du tout la face avant de la partie de moyeu centrale 11.

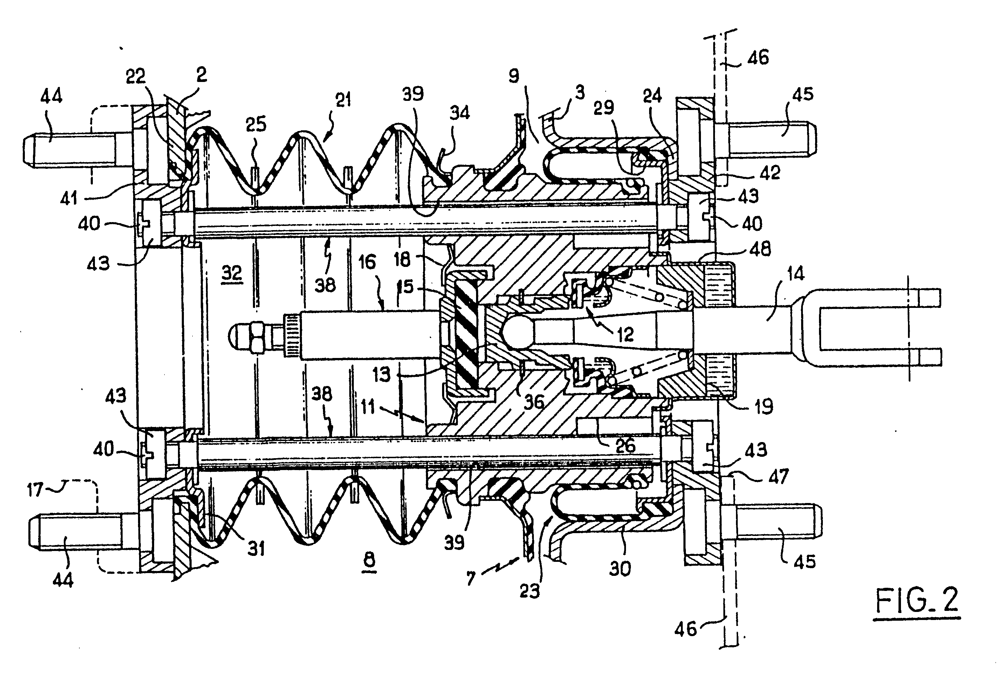

La première paroi étanche flexible 21 est avantageusement constituée d'un soufflet en matériau élastomère armé par des anneaux 25 en métal ou en matériau plastique à haute résistance disposés extérieurement dans les creux du soufflet. Dans le mode de réalisation des Fig. 1 et 2, la seconde paroi étanche flexible 23 est constituée d'une membrane à roulement dont le bourrelet intérieur est bloqué élastiquement dans une gorge périphérique d'une portion arrière de diamètre réduit 26 (typiquement elliptique) de la partie de moyeu centrale 11 et dont le bourrelet extérieur est pris entre une plaque de montage annulaire intérieure 29 et l'épaulement défini par la zone annulaire d'extrémité centrale 24 formant collerette rabattue vers l'intérieur à l'extrémité d'un prolongement tubulaire central 30 de la coquille arrière 3 entourant, radialement à l'extérieur, la membrane 23 et la portion de diamètre réduit arrière 26 de la partie de moyeu centrale 11. De façon similaire, l'extrémité avant du soufflet ou première paroi étanche 21 est maintenue pincée contre la face interne de la zone d'extrémité annulaire centrale 22 de la coquille avant 2 par une plaque de montage annulaire intérieure 31. Le maintien en place des plaques de montage 29 et 31 sera explicité plus avant. Avec cet agencement, conformément à l'invention, est ménagée dans le servo-moteur une zone tubulaire centrale neutre 32, délimitée extérieurement par les première et seconde parois étanches flexibles 21 et 23, ne participant aucunement au système d'échange de fluide du servo-moteur et étant notamment totalement disjointe des chambres 8 et 9 du servo-moteur. La valve de commande 12, disposée centralement dans la portion de diamètre réduit 26, communique avec la chambre de dépression avant 8 par un canal 33 débouchant dans cette chambre avant 8 à la périphérie de la partie de moyeu centrale 11 entre la zone de montage du soufflet 21 et la zone de montage de la partie intérieure de la structure de paroi mobile 7. Une plaque annulaire profilée ajourée 34 est montée élastiquement sur le bourrelet de montage du soufflet 21 sur la partie de moyeu centrale 11 pour éviter tous risques d'occultation par la membrane du soufflet 21 de l'ouverture par laquelle le passage 33 débouche dans la chambre 8. La valve 12 communique classiquement avec la chambre arrière de travail 9 par un passage radial 35 débouchant à la périphérie de la partie de moyeu centrale 11 au niveau de la zone entre la membrane roulante 23 et le bourrelet intérieur de la membrane 5 de la structure de paroi mobile 7. Dans des rainures latérales du passage 35 est montée la clavette 36 de contrôle de la course du plongeur 13. Avantageusement, cette clavette 36 est prolongée radialement vers l'extérieur, dans le passage 35, par une partie ajourée 37 évitant également que le pli de la membrane 23 puisse occulter le passage 35 et pouvant constituer butée de retour, contre la coquille arrière, de l'équipage piston 7/partie de moyeu centrale 11.

Conformément à un aspect de l'invention, la zone centrale tubulaire 32 est mise à profit pour disposer, symétriquement par rapport à l'axe général bu boîtier, au moins une paire de tiges guides ou tirants 38, traversant axialement le boîtier 1 et s'étendant chacune au travers d'un alésage axial traversant 39 formé dans le corps de la partie de moyeu centrale 11, entre la zone périphérique de cette dernière où sont raccordées les memrbanes 21, 5 et 23 et la partie centrale de diamètre réduit 26 abritant le valve 12. Au moins un des alésages 39 est dimensionné pour permettre un coulissement lâche par rapport au tirant associé 38 en établissant ainsi, en l'absence de tout organe d'étanchéité, une libre communication permanente entre les deux zones centrales axialement opposées du servo-moteur, les tirants guides 38, rendus stationnaires en étant fixés par leurs extrémités à des structures extérieures au boîtier 1, assurant le guidage axial de la partie de moyeu centrale 11 et, partant, de la structure de paroi mobile formant piston 7. Dans un mode de réalisation particulier, l'autre des alésages 39 comporte, vers son extrémité arrière, une zone de diamètre réduit permettant, à ce niveau, un coulissement juste de la partie de moyeu centrale 11 sur le tirant guide associé 38.

Comme on le voit mieux sur la Fig. 2, dans ce mode de réalisation chaque tirant guide 38 comporte, à chaque extrémité, une partie extrême de diamètre réduit filetée 40 passant à travers des trous alignés dans la plaque de montage correspondante 29 ou 31 et dans une bride annulaire 41 ou 42 ayant une partie centrale pénétrant légèrement dans l'ouverture centrale ménagée par les zones d'extrémités centrales annulaires 22 ou 24 des coquilles du boîtier pour coopérer en appui avec les plaques de maintien 31 ou 29 en portant extérieurement contre lesdites zones d'extrémité annulaires centrales 22 et 24 des coquilles du boîtier. Chaque bride 41 et 42 comporte des lamages formant logements et épaulements pour des écrous 43 vissés sur les extrémités filetées 40 des tirants 38 et assurant ainsi l'assemblage, sur le boîtier, des brides 41 et 42, des plaques de maintien 31 et 29 et des tirants guides 38. Les brides 41 et 42 comportent, en outre, des lamages opposés formant logements et épaulements pour des vis de fixation 44 et 45 assurant respectivement l'assemblage du maître-cylindre 17 sur le boîtier 1 et de l'ensemble maître-cylindre 17/boîtier 1 sur une paroi fixe 46 d'un véhicule pourvue d'un orifice 47 permettant le passage du capot arrière 48 de la partie du moyeu centrale 11 renfermant le filtre 19 et de la tige d'actionnement 14. Avec un tel montage on notera que, conformément à un aspect de l'invention, les tirants guides 38, non seulement s'étendent dans la zone centrale neutre du boîtier mais ne traversent pas non plus les coquilles 2 et 3 du boîtier et transmettent directement les efforts du maître-cylindre 17 à la paroi de montage 46, via uniquement les brides d'extrémité 41 et 42. On conçoit de même que, selon les entre-axes prévus entre les boulons de fixation 45 et selon le nombre de boulons de fixation requis, la bride côté intérieur 42 peut être dimensionnée en conséquence sans qu'il soit besoin de modifier la structure des coquilles 2 et 3 du boîtier 1.

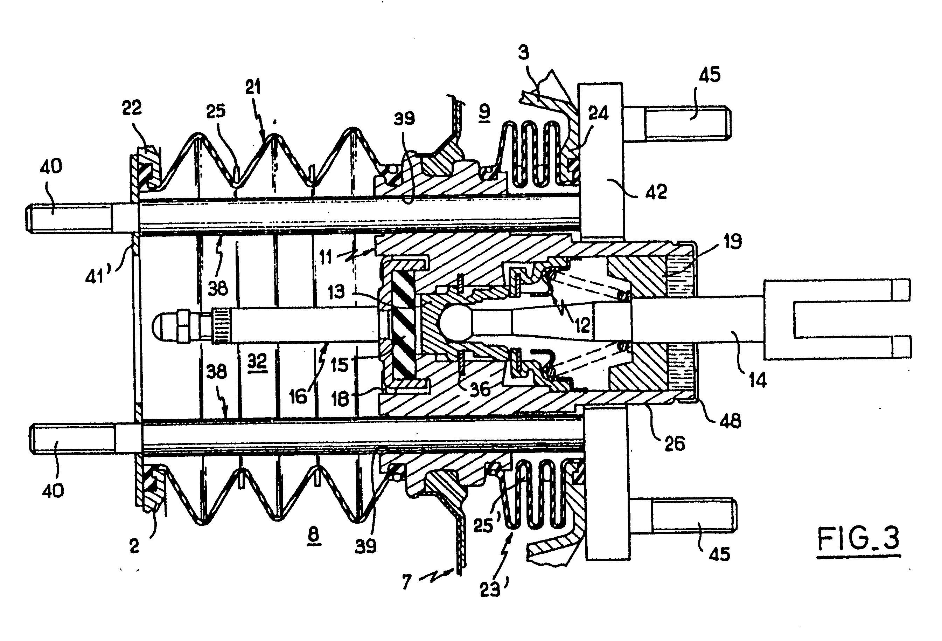

Le mode de réalisation représenté sur la Fig. 3

differe essentiellement du précédent en ce sens que la seconde paroi étanche flexible est ici constituée d'un second soufflet armé 23', similaire au soufflet 21, dont le bourrelet d'extrémité extérieur est pris entre la zone d'extrémité centrale annulaire 24 de la coquille arrière 3 et la bride annulaire 42, le bourrelet d'extrémité avant du soufflet 23' étant engagé sur la périphérie de la zone médiane de la partie de moyeu centrale 11, le passage 35 débouchant, comme précédemment, entre ce soufflet arrière 23' et la zone centrale de montage de la structure de paroi mobile 7. Dans le mode de réalisation simplifié de la Fig. 3, l'extrémité filetée 40 des tirants guides 38, côté maître-cylindre, est allongée pour servir directement à l'assemblage du maître-cylindre avec le boîtier, une simple plaque annulaire 41' étant interposée entre l'épaulement de raccordement de l'extrémité filetée 40 au corps du tirant guide 38 et la bride du maître-cylindre pour pincer le bourrelet d'extrémité du soufflet avant 21 contre la zone d'extrémité centrale annulaire 22 de la coquille avant 2.

**Revendications**

1. Servomoteur d'assistance au freinage, comprenant un boîtier (1), une structure de paroi (7) mobile axialement dans le boîtier et divisant ce dernier en une première (8) et une seconde (9) chambres, une valve de commande (12), disposés dans une partie de moyeu centrale (11) solidaire en déplacement de la structure de paroi mobile (7), pour établir sélectivement, sous l'action d'un organe d'entrée (14), une communication entre les deux chambres (8, 9), et une première (21) et une seconde (23; 23') parois flexibles étanches, de configuration sensiblement cylindrique, disposées respectivement dans les première (8) et seconde (9) chambres et reliées chacune à la paroi d'extrémité correspondante (2, 3) du boîtier de façon à ménager dans les deux chambres (8, 9) des zones centrales (32) délimitées extérieurement, radialement, par lesdites première (21) et seconde (23, 23') parois flexibles, caractérisé en ce que les première (21) et seconde (23; 233) parois flexibles sont reliées chacune de façon étanche à la partie de moyeu centrale (11) renfermant la valve (12) et comportant au moins un passage traversant (39) reliant en permanence les zones centrales (32).

2. Servomoteur selon la revendication 1, caractérisé en ce qu'il comprend des premier (33) et second (35) passages de fluide, établissant respectivement une communication entre la valve (12) et les première (8) et seconde (9) chambres, formés dans la partie de moyeu centrale (11) et débouchant chacun radialement à la périphérie de celle-ci.

3. Servomoteur selon l'une des revendications 1 et 2, caractérisé en ce que la partie de moyeu centrale (11) comprend une portion de diamètre réduit (26), à l'intérieur, radialement, des première (21) et seconde (23; 23) parois flexibles, dans laquelle s'étend axialement le passage traversant (39).

4. Servomoteur selon la revendication 3, caractérisé en ce qu'il comprend au moins un élément stationnaire de guidage (38) s'étendant axialement dans les zones centrales (32) et reçu à coulissement dans le passage traversant (39).

5. Servomoteur selon la revendication 4, caractérisé en ce que le passage traversant (39) s'étend axialement dans la partie de moyeu centrale (11), radialement à l'extérieur de la valve (12).

6. Servomoteur selon la revendication 5, caractérisé en ce que l'élément stationnaire de guidage est constitué d'un élement transmetteur d'efforts (38) traversant axialement le boîtier (1).

7. Servomoteur selon la revendication 6, caractérisé en ce que l'élément transmetteur d'efforts (38) comprend, à chaque extrémité axiale, un premier moyen de fixation (40).

8. Servomoteur selon la revendication 6 ou la revendication 7, caractérisé en ce que l'élément transmetteur d'efforts (38) est un tirant.

9. Servomoteur selon la revendication 8, caractérisé en ce qu'il comprend au moins une paire de tirants (38) disposés symétriquement par rapport à l'axe général du boîtier (1).

10. Servomoteur selon la revendication 9, caractérisé en ce que les tirants (38) de la paire sont reliés entre eux à au moins une de leurs extrémités axiales par une structure annulaire (41; 41'; 42) comportant des seconds moyens de fixation (44, 45).

11. Servomoteur selon la revendication 10, caractérisé en ce que les tirants (38) de la paire sont reliés à chacune de leurs extrémités axiales par une dite structure annulaire (41, 42) pourvue de dits seconds moyens de fixation (44, 45).

12. Servomoteur selon la revendication 10 ou la revendication 11, caractérisé en ce que ladite structure annulaire (41; 41'; 42) participe au montage de la paroi étanche flexible (21; 23; 23') adjacente sur la paroi d'extrémité correspondante du boîtier (1).

**Patentansprüche**

1. Bremsverstärkungs-Servomotor mit einem Gehäuse (1), einer Wandstruktur (7), die im Gehäuse axial beweglich ist und das letztere in eine erste (8) und eine zweite (9) Kammer unterteilt, einem Steuerventil (12), das in einem zentralen Nabenabschnitt (11) angeordnet ist, der gemeinsam mit der beweglichen Wandstruktur (7) verschiebbar ist, um unter der Wirkung eines Betätigungsorgans (14) eine Verbindung zwischen den beiden Kammern (8, 9) wahlweise herzustellen, und einer ersten (21) sowie einer zweiten (23; 23') dichten flexiblen Wand von im wesentlichen zylindrischer Konfiguration, die in der ersten (8) bzw. zweiten (9) Kammer angeordnet und jeweils mit der zugehörigen Endwand (2, 3) des Gehäuses verbunden ist, derart, daß in den beiden Kammern (8, 9) zentrale Bereich (32) gebildet werden, die radiale außen von der ersten (21) und der zweiten (23; 23') flexiblen Wand begrenzt werden, dadurch gekennzeichnet, daß die erste (21) und zweite (23; 23') flexible Wand jeweils mit dem zentralen Nabenabschnitt (11) abgedichtet verbunden sind, der das Steuerventil (12) einschließt und mindestens einen Durchgangskanal (39) aufweist, der die zentralen Bereich (32) ständig miteinander verbindet.

2. Servomotor nach Anspruch 1, dadurch gekennzeichnet, daß er zur Herstellung einer Verbindung zwischen dem Steuerventil (12) und der ersten (8) bzw. der zweiten (9) Kammer Strömungskanäle aufweist, die in dem zentralen Nabenabschnitt (11) gebildet sind und jeweils radial am Außenumfang desselben münden.

3. Servomotor nach Anspruch 1 oder 2, dadurch gekennzeichnet, daß der zentrale Nabenabschnitt (11) radial innerhalb der ersten (21) und zweiten (23; 23') flexiblen Wand einen Abschnitt verringerten Durchmessers (26) aufweist, in den sich der Durchgangskanal (39) axial erstreckt.

4. Servomotor nach Anspruch 3, dadurch gekennzeichnet, daß er mindestens ein stationäres Führungsteil (38) aufweist, das sich axial in die zentralen Bereiche (32) erstreckt und von dem Durchgangskanal (39) gleitend aufgenommen wird.

5. Servomotor nach Anspruch 4, dadurch gekennzeichnet, daß sich der Durchgangskanal (39) radial außerhalb des Steuerventils (12) axial in den zentralen Nabenabschnitt (11) erstreckt.

6. Servomotor nach Anspruch 5, dadurch gekennzeichnet, daß das stationäre Führungsteil von einem kraftübertragenden Teil (38) gebildet wird, das sich axial in das Gehäuse (1) erstreckt.

7. Servomotor nach Anspruch 6, dadurch gekennzeichnet, daß das kraftübertragende Teil (38) an jedem axialen Ende ein erstes Befestigungsmittel (40) aufweist.

8. Servomotor nach Anspruch 6 oder 7, dadurch gekennzeichnet, daß das kraftübertragende Teil (38) eine Zugstange ist.

9. Servmotor nach Anspruch 8, dadurch gekennzeichnet, daß er mindestens ein Paar Zugstangen (38) aufweist, die bezüglich der Hauptachse des Gehäuses (1) symmetrisch angeordnet sind.

10. Servomotor nach Anspruch 9, dadurch gekennzeichnet, daß die Zugstangen (38) des Paares an mindestens einem ihrer axialen Enden untereinander durch eine Ringstruktur (41; 41'; 42) verbunden sind, die zweite Befestigungsmittel (44, 45) umfaßt.

11. Servomotor nach Anspruch 10, dadurch gekennzeichnet, daß die Zugstangen (38) des Paares an jedem ihrer axialen Enden durch eine besagte Ringstruktur (41, 42) verbunden sind, die mit besagten zweiten Befestigungsmitteln (44, 45) versehen ist.

12. Servomotor nach Anspruch 10 oder 11, dadurch gekennzeichnet, daß die Ringstruktur (41; 41'; 42) an der Befestigung der angrenzenden dichten flexiblen Wand (21; 23; 23') an der entsprechenden Endwand des Gehäuses (1) teilnimmt.

**Claims**

1. A brake assistance servomotor comprising a casing (1), a wall structure (7) axially movable in the casing and dividing the latter into first (8) and second (9) chambers, a control valve (12) disposed in a central hub portion (11) displaceable together with the movable wall structure (7) for selectively establishing a communication between the two chambers (8, 9) under the action of an input member (14), and first (21) and second (23; 23') fluid-tight flexible walls of substantially cylindrical configuration disposed, respectively, in the first (8) and second (9) chambers and each connected to the corresponding end wall (2, 3) of the casing such as to provide in the two chambers (8, 9) central zones (32) delimited radially outwardly by said first (21) and second (23; 23') flexible walls, characterized in that the first (21) and second (23; 23') flexible walls each are connected in fluid-tight manner to the central hub portion (11) enclosing the valve (12) and which includes at least one traversing passage (29) permanently connecting the central zones (32).

2. Servomotor according to claim 1, characterized in that it comprises, for establishing a communication between the valve (12) and the first (8) and second (9) chambers, respectively, first (33) and second (35) fluid passages formed in the central hub portion (11) and each merging radially at the periphery of the latter.

3. Servomotor according to any of claims 1 and 2, characterized in that the central hub portion (11) comprises a portion of reduced diameter (26) radially inside of the first (21) and second (23; 23') flexible walls, into which the traversing passage (39) axially extends.

4. Servomotor according to claim 3, characterized in that it comprises at least one stationary guiding element (38) axially extending into the central zones (32) and slidingly received in the traversing passage (39).

5. Servomotor according to claim 4, characterized in that the traversing passage (39) extends axially into the central hub portion (11) radially within the valve (12).

6. Servomotor according to claim 5, characterized in that the stationary guiding element is comprised of a force-transmitting member (38) axially traversing the casing (1).

7. Servomotor according to claim 6, characterized in that the force-transmitting member (38) includes at each axial end a first fixing means (40).

8. Servomotor according to claim 6 or claim 7, characterized in that the force transmitting member (38) is a tie-rod.

9. Servomotor according to claim 8, characterized in that it comprises at least one pair of tie-rods (38) disposed symmetrically with respect to the general axis of the casing (1).

10. Servomotor according to claim 9, characterized in that the tie-rods (38) of the pair are connected to each other at at least one of their axial ends by an annular structure (41; 41'; 42) including second fixing means (44, 45).

11. Servomotor according to claim 10, characterized in that the tie-rods (38) of the pair each are connected at their axial ends by a said annular structure (21, 42) provided with said second fixing means (44, 45).

12. Servomotor according to claim 10 or claim 11, characterized in that said annular structure (41; 41'; 42) participate in the mounting of the adjacent fluid-tight flexible wall (21; 23; 23') to the corresponding end wall of the casing (1).

## FIG_1

FIG. 2

0 107 997

FIG.3

0 107 997